# EUROPÄISCHE PATENTSCHRIFT

(11) **EP 2 921 592 B1**
(45) Veröffentlichungstag und Bekanntmachung des Hinweises auf die Patenterteilung: **14.02.2018**
(21) Anmeldenummer: 15000724.3
(22) Anmeldetag: 12.03.2015
(51) Int. Cl.: E03C 1/02

(54) **WANDEINBAUGEHÄUSE FÜR SANITÄRE INSTALLATIONSELEMENTE MIT EINEM STUFENLOS VERSTELLBAREN AUßENSEITIGEN ANLAGEFLANSCH UND KLEMMELEMENTEN**
WALL-MOUNTED HOUSING FOR SANITARY INSTALLATION ELEMENTS WITH CONTINUOUSLY ADJUSTABLE OUTER-SIDE BEARING FLANGE AND CLAMPING ELEMENTS
BOÎTIER D'ENCASTREMENT MURAL POUR DES ÉLÉMENTS D'INSTALLATIONS SANITAIRES AVEC UNE BUTÉE LATÉRALE EXTÉRIEURE RÉGLABLE EN CONTINU ET DES ÉLÉMENTS DE SERRAGE

(30) Priorität: 17.03.2014 AT 1882014
(43) Veröffentlichungstag der Anmeldung: 23.09.2015
(73) Patentinhaber: Gustav Schmiedl Armaturenfabrik Gesellschaft m.b.H. & Co. KG, 6060 Hall (AT)
(72) Erfinder: Anker, Oliver, 6075 Tulfes (AT)
(74) Vertreter: Torggler & Hofinger Patentanwälte

(56) Entgegenhaltungen:
- EP-A1- 2 226 433
- DE-A1-102012 203 394
- DE-U1- 20 321 431
- US-A- 3 096 782
- US-B1- 7 357 148

## Beschreibung

Die Erfindung betrifft ein Wandeinbaugehäuse für sanitäre Installationselemente, mit einer Seitenwand, in der Durchtrittsöffnungen für Anschlussleitungen vorgesehen sind, mit einem Klemmelement und mit einem außenseitigen Anlageflansch für eine Wandverkleidung, der entlang der Seitenwand stufenlos verschiebbar und in jedem Abstand zu den Durchtrittsöffnungen an der Seitenwand reibungsschlüssig fixierbar ausgebildet ist, wobei zwischen dem Anlageflansch und der Seitenwand zumindest ein Freiraum ausgebildet ist, in den das Klemmelement einschiebbar ist.
Derartige Wandeinbaugehäuse mit stufenlos verstellbaren Anlageflanschen sind beispielsweise aus DE 20321431 bekannt. Sie dienen zuerst dazu, einen Armaturengrundkörper und nach Abschluss der Bau- und Installationsarbeiten, eine Sanitärarmatur aufzunehmen, sobald die wandseitigen Voraussetzungen erfüllt sind. Die Wandeinbaugehäuse sind in jeder beliebigen Bauweise anwendbar und werden vor allem auch in der sogenannten Trockenbauweise eingesetzt, in der Wandplatten beidseitig an Stehern mit dazwischen sich erstreckenden Hohlräumen fixiert sind. Der Anlageflansch weist ein Innengewinde auf, das auf ein Außengewinde des Wandeinbaugehäuses aufschraubbar ist. die endgültige Position kann durch einen Keil, der in eine Ausnehmung des Anlageflansches eingeschlagen werden kann, fixiert werden.
Um nur eine kurze Verdrehung in jeder Höhe zu erzielen, sind beide Gewinde mehrfach unterbrochen, sodass der Anlageflansch vor der Verdrehung für die Feineinstellung geradlinig aufgeschoben werden kann. Fertigung und Handhabung sind dadurch aufwendig und umständlich.
Die Erfindung hat es sich nun zur Aufgabe gestellt, ein Wandeinbaugehäuse mit einem außenseitigen Anlageflansch zur Verfügung zu stellen, bei dem die vorstehend beschriebenen Probleme nicht auftreten.
Erfindungsgemäß wird dies dadurch erreicht, dass das Klemmelement als Zunge von einem zweiten Flansch absteht, der entlang derselben Achse wie der Anlageflansch verschiebbar ist.

Durch die stufenlose Verschiebbarkeit des Anlageflansches und dessen reibungsschlüssige Fixierung in jeder beliebigen Position oberhalb der Durchtrittsöffnung der Einbau in der jeweils benötigten Position des Anlageflansches erfolgen. Falls die Tiefe der Wandöffnung zu gering ist, kann der Anlageflansch eingestellt und ein Überstand abgeschnitten werden. Bei ausreichend tiefer Wandöffnung und entsprechenden Anschlussleitungen, deren Position justierbar ist, kann aber auch der in der passenden Position fixierte Anlageflansch als Montageelement an der Verbindungsplatte herangezogen werden.

Eine bevorzugte Ausführung sieht vor, dass vom Anlageflansch im Bereich jedes Freiraums eine Lasche absteht, die den Klemmbereich verlängert. Vor allem in dieser Ausführung sind bevorzugt im Anlageflansch zwei Freiräume einander diametral gegenüberliegend vorgesehen. Die pro Freiraum von dem zum Anlageflansch parallel verschiebbaren zweiten Flansch abstehenden Klemmelement schieben sich in den Freiraum ein und klemmen zwischen der Lasche und der Seitenwand. Die Lasche kann hierfür geringfügig elastisch nachgiebig sein.

Der an die Durchtrittsöffnungen anschließende vordere Abschnitt der Seitenwand des Wandeinbaugehäuses ist bevorzugt hohl zylindrisch ausgebildet, wobei der Anlageflansch und auch der zweite Flansch annähernd ringförmig sind, das heißt zumindest die Innenkontur ist ein Kreis, der beim Anlageflansch durch die Freiräume ausgebuchtet ist.

Der Anlageflansch kann wahlweise mit den Laschen nach vorne, also zu den Durchtrittsöffnungen hin gerichtet, oder nach hinten, also zum Öffnungsrand des Wandeinbaugehäuses hin gerichtet, auf die Seitenwand aufgeschoben werden. In seiner tiefstmöglichen Position liegt der Anlageflansch am oberen Rand der Durchtrittsöffnungen.

In einer weiteren bevorzugten Ausführung weist das Wandeinbaugehäuse vier um jeweils 90° versetzte, also kreuzweise angeordnete Durchtrittsöffnungen auf, zwischen denen vier Wandbereiche der Seitenwand verbleiben. In zwei einander gegenüberliegenden Wandbereichen zwischen den Durchtrittsöffnungen können Stege bzw. Flügel von der Seitenwand abstehen, die als Anschlag für den Anlageflansch dienen und seine maximale Einschubposition begrenzen.

Je eine Lasche und ein Klemmelement bilden eine Klemmvorrichtung; zwei derartige Klemmvorrichtungen können in dieser Ausführung in die beiden anderen freien Wandbereiche zwischen den Durchtrittsöffnungen eingreifen und den dort vorhandenen Raum ausnützen.

Nachstehend wird nun die Erfindung anhand der Figuren der beiliegenden Zeichnung näher beschrieben, ohne darauf beschränkt zu sein. Es zeigen:

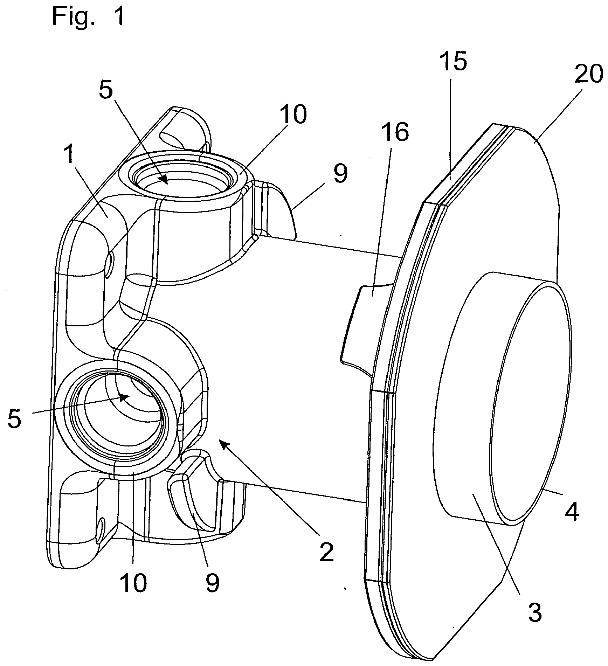

- Fig. 1: eine Schrägansicht eines erfindungsgemäßen Wandeinbaugehäuses,
- Fig. 2: in Explosionsdarstellung eine Ausführung der Klemmvorrichtung,
- Fig. 3: eine Draufsicht auf das Wandeinbaugehäuse mit Anlageflansch ohne Klemmelement,
- Fig. 4: einen Längsschnitt durch das Wandeinbaugehäuse, wobei der Anlageflansch in maximaler Einschubposition ist, und
- Fig. 5: eine Schrägansicht entsprechend Fig. 1 einer zweiten Ausführung.

Das Wandeinbaugehäuse für sanitäre Installationselemente aller Art, beispielsweise Einhebelmischer, Thermostate, Unterputzventile, Wandanschlüsse, etc. weist einen Basis- oder Bodenteil 1 und eine mit dem Bodenteil 1 verbundene Seitenwand 2 auf. Das Gehäuse ist an der Vorderseite offen und nimmt nach Abschluss der Roh- und Fertigungsarbeiten das sanitäre Installationselement auf, wobei eine Abdeckrosette das Wandeinbaugehäuse überdeckt. Die Abdeckrosette wird dem Installationselement angepasst ausgewählt.

Das Wandeinbaugehäuse ist mit Durchtrittsöffnungen 5 versehen, durch die Anschlussleitungen mit einem nicht gezeigten Armaturengrundkörper verbunden werden, der in das Wandeinbaugehäuse eingesetzt wird und der das Installationselement aufnimmt. Bevorzugt sind vier Durchtrittsöffnungen 5 über kreuz angeordnet, wobei insbesondere durch die linke und die gegenüberliegende rechte Durchtrittsöffnung 5 eine Kalt- bzw. Warmwasserleitung und durch die obere und untere Durchtrittsöffnung 5 Leitungen zu Brause- bzw. Wannenanschlüssen geführt werden können. Im Armaturengrundkörper werden die vier Anschlüsse umgelenkt und treten parallel an der Vorderseite aus. In dem mit dem Armaturengrundkörper zu verbindenden Installationselement werden dann die entsprechenden Verbindungen zwischen den Leitungen hergestellt. Je nach anzuschließender Sanitärarmatur können die Anschlussleitungen auch anders verteilt sein bzw. variieren.

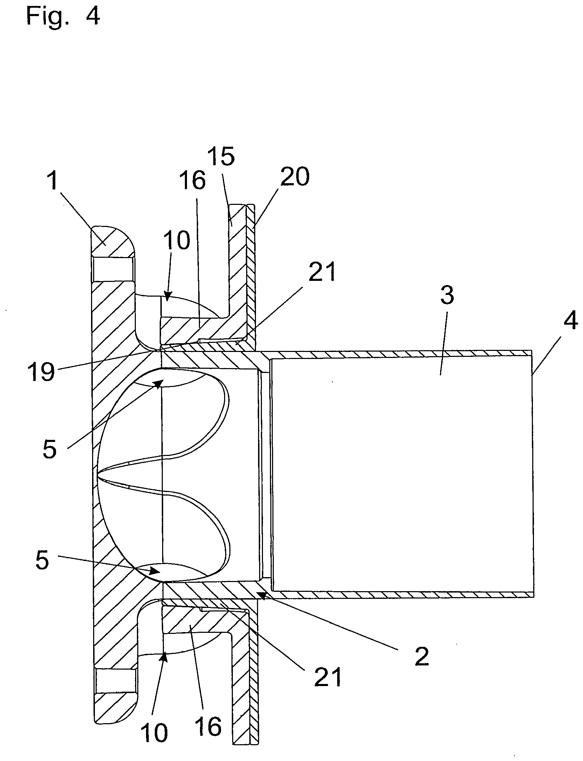

Die Durchtrittsöffnungen 5 für die Anschlussleitungen sind von Hülsen 10 umgeben, die jeweils aus einer am Bodenteil 1 und an der Seitenwand 2 nach außen gerichteten Halbschale gebildet sind. Einander diametral gegenüberliegend sind zwischen den Hülsen 10 zwei Stege bzw. Flügel 9 von der Seitenwand 2 nach außen abstehend vorgesehen. Die Flügel 9 sind so angeordnet, dass ihre Oberflächen mit der Oberseite 9 der Hülse 10 bündig sind, wie aus Fig. 4 ersichtlich ist. Zwischen den Flügeln 9 und dem Vorderrand 4 der Seitenwand 2 ist ein hohlzylindrischer Abschnitt 3 ausgebildet, auf dem ein Anlageflansch 15 stufenlos verschiebbar und in jeder Position fixierbar ist.

Das Wandeinbaugehäuse kann in einer Öffnung im Mauerwerk oder in Trockenbauweise an einer Wand mittels Schrauben oder dergleichen durch im Bodenteil 1 vorgesehene Löcher in herkömmlicher Weise fixiert werden. Der Anlageflansch 15 wird in jene Position verschoben, in der eine vordere Wandplatte oder Wandfliese abgestützt werden kann und der gegebenenfalls überstehende vorderste Teil des hohlzylindrischen Abschnitts 3 wird dann abgeschnitten.

Das Wandeinbaugehäuse kann auch in einer Hinterwandinstallation eingesetzt werden, wobei in diesem Fall der Anlageflansch 15 in eine gewünschte Position geschoben und fixiert wird. Der Anlageflansch 15 kann dann von hinten an der vorderen Wandplatte befestigt werden.

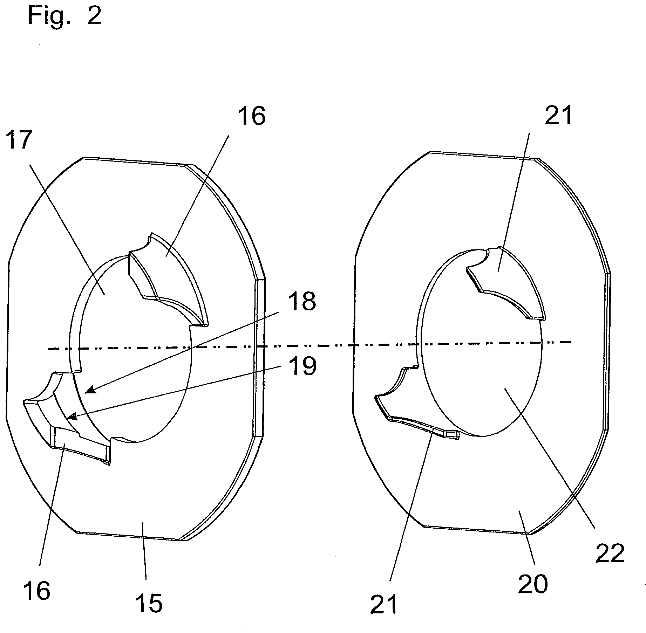

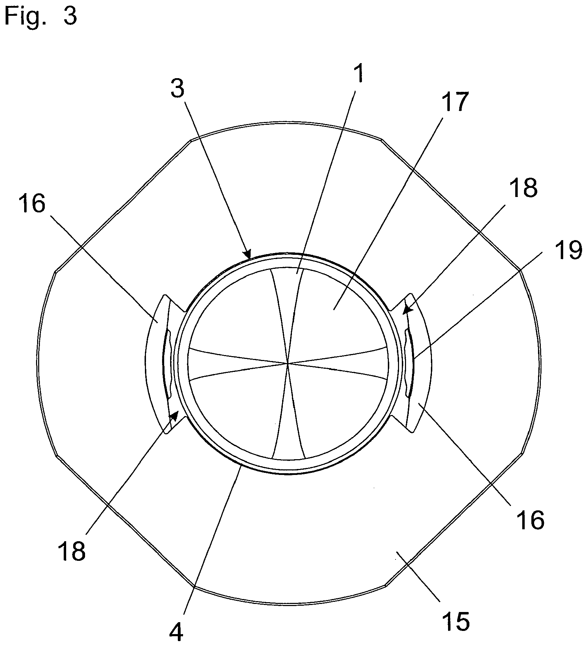

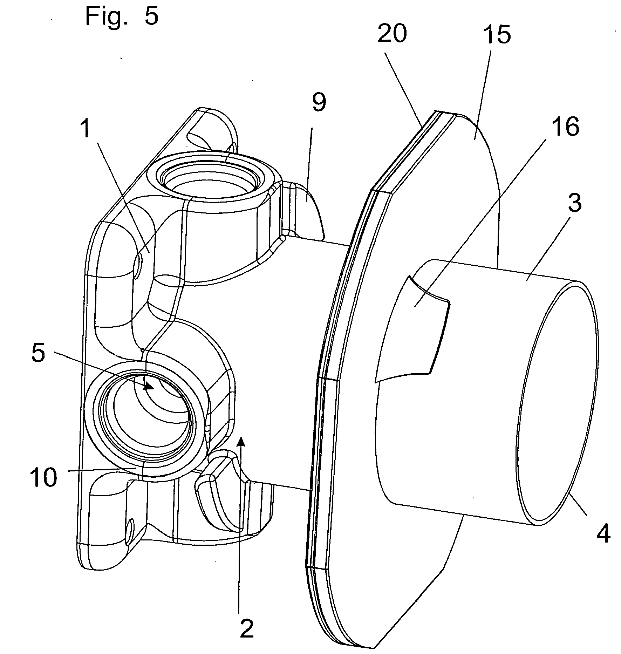

Wie erwähnt kann der Anlageflansch 15 stufenlos entlang des hohlzylindrischen Abschnitts 3 der Seitenwand 2 in jede beliebige Position verschoben und dort reibungsschlüssig fixiert werden. Der Anlageflansch 15 weist, wie aus Fig. 2 und 3 ersichtlich, eine zentrale kreisförmige Öffnung 17 auf, die an gegenüberliegenden Stellen erweitert ist und Freiräume 18 bildet, die zur Aufnahme von Klemmelementen 21 dienen. Im Bereich der beiden Freiräume 18 stehen vom Anlageflansch 15 zwei Laschen 16 etwa parallel zur hohlzylindrischen Seitenwand 3 ab. Die Laschen 16 verjüngen sich zum freien Ende hin und weisen eine innenseitige Abstufung 19 auf. Jeder Lasche 16 wird ein Klemmelement 21 in Form einer gleichartigen Klemmzunge zugeordnet, die an einem zweiten Flansch 20 angeordnet ist, der ebenfalls eine zentrale Öffnung 22 aufweist und auf dem hohlzylindrischen Abschnitt 3 der Seitenwand 2 verschoben werden kann.
Um den Anlageflansch 15 in einer beliebigen Position entlang der Seitenwand 2 reibungsschlüssig zu fixieren, werden bevorzugt der Anlageflansch 15 und der zweite Flansch 20 in Iosem Verbund, das heißt die durch die Freiräume 18 gesteckten Klemmelemente 21 enden an der Abstufung 19, gemeinsam aufgeschoben. Nach Erreichen der gewünschten Position wird der zweite Flansch 20 gehalten und der Anlageflansch 15 zurück gezogen, wobei sich die zungenförmigen Klemmelemente 21 über die Abstufung 19 aufschieben und die Laschen 16 geringfügig nach außen drücken. Alternativ ist es auch möglich, zuerst den Anlageflansch 15 an die gewünschte Stelle zu schieben und dann den zweiten Flansch 20 nach zu schieben, wobei die beiden zungenförmigen Klemmelemente 21 in die Freiräume 18 eintreten. Sie erreichen jetzt die Abstufung 19 der Laschen 16, die nach außen verdrängt und gespannt werden. In jedem Fall werden die Klemmelemente 21 zwischen den Laschen 16 und dem hohlzylindrischen Abschnitt 3 der Seitenwand 2 eingeklemmt und die Flanscheinheit 15/20 ist fixiert.
Laschen 16 und Klemmelemente 17 verjüngen sich zum freien Ende hin und sind seitlich konkav eingezogen. Dies ermöglicht die Positionierung des Anlageflansches 15 auch direkt an den Flügeln 9, da die beiden Klemmvorrichtungen in den Raum zwischen zwei Hülsen 10 eingreifen können. In Fig. 4 ist diese Stellung gezeigt.
Wie in Fig. 5 dargestellt, ist es aber auch möglich, den Anlageflansch 15 so anzuordnen, dass die aus Lasche 16 und Klemmelement 21 bestehenden Klemmvorrichtungen zum offenen Vorderrand 4 des hohlzylindrischen Abschnitts 3 der Seitenwand 2 zeigen.

## Patentansprüche

1. Wandeinbaugehäuse für sanitäre Installationselemente, mit einer Seitenwand (2), in der Durchtrittsöffnungen (5) für Anschlussleitungen vorgesehen sind, mit einem Klemmelement (21) und mit einem außenseitigen Anlageflansch (15) für eine Wandverkleidung, der entlang der Seitenwand (2) stufenlos verschiebbar und in jedem Abstand zu den Durchtrittsöffnungen (5) an der Seitenwand (2) reibungsschlüssig fixierbar ausgebildet ist, wobei zwischen dem Anlageflansch (15) und der Seitenwand (2) zumindest ein Freiraum (18) ausgebildet ist, in den das Klemmelement (21) einschiebbar ist, **dadurch gekennzeichnet, dass** das Klemmelement (21) als Zunge von einem zweiten Flansch (20) absteht, der entlang derselben Achse wie der Anlageflansch (15) verschiebbar ist.

2. Wandeinbaugehäuse nach Anspruch 1, **dadurch gekennzeichnet, dass** vom Anlageflansch (15) im Bereich jedes Freiraums (18) eine Lasche (16) absteht, die den Klemmbereich verlängert.

3. Wandeinbaugehäuse nach Anspruch 1 oder 2, **dadurch gekennzeichnet, dass** die Seitenwand (2) einen an die Durchtrittsöffnungen (5) anschließenden hohlzylindrischen Abschnitt (3) aufweist und der Anlageflansch (15) und der zweite Flansch (20) annähernd ringförmig sind.

4. Wandeinbaugehäuse nach Anspruch 3, **dadurch gekennzeichnet, dass** jede Lasche (16) und jedes Klemmelement (21) parallel zum hohlzylindrischen Abschnitt (3) der Seitenwand (2) über maximal 90° gebogen sind, und sich zum freien Ende hin verjüngen.

5. Wandeinbaugehäuse nach einem der Ansprüche 1 bis 4, **dadurch gekennzeichnet, dass** in der Seitenwand (2) vier Durchtrittsöffnungen (5) kreuzweise vorgesehen sind, und dass einander diametral gegenüberliegend zwischen den Durchtrittsöffnungen (5) zwei Flügel (9) von der Seitenwand (2) abstehen, die die maximale Einschubposition des Anlageflansches (15) begrenzen, und dass in der maximalen Einschubposition des Anlageflansches (15) um 90° versetzt jeweils eine Lasche (16) und ein Klemmelement (21) zwischen die Durchtrittsöffnungen (5) eingreifen.

## Claims

1. Wall-concealed housing for sanitary installation elements, with a side wall (2) in which openings (5) for connecting pipes are provided, with a clamping element (21) and with an external bearing flange (15) for a wall cover panel, which can be moved continuously along the side wall (2) and is formed fixable by friction locking to the side wall (2) at any distance from the openings (5), wherein at least one space (18) is formed between the bearing flange (15) and the side wall (2), into which the clamping element (21) can be inserted, **characterized in that** the clamping element (21) projects as a tongue from a second flange (20) which can be moved along the same axis as the bearing flange (15).

2. Wall-concealed housing according to claim 1, **characterized in that**, in the area of each space (18), a lug (16) which extends the clamping area projects from the bearing flange (15).

3. Wall-concealed housing according to claim 1 or 2, **characterized in that** the side wall (2) has a hollow cylindrical section (3) connecting to the openings (5), and the bearing flange (15) and the second flange (20) are approximately ringshaped.

4. Wall-concealed housing according to claim 3, **characterized in that** each lug (16) and each clamping element (21) are bent parallel to the hollow cylindrical section (3) of the side wall (2) by a maximum of 90° and taper towards the free end.

5. Wall-concealed housing according to one of claims 1 to 4, **characterized in that**, in the side wall (2), four openings (5) are provided in the form of a cross, and **in that**, between the openings (5) and lying diametrically opposite each other, two wings (9) which delimit the maximum insertion position of the bearing flange (15) project from the side wall (2), and **in that** in the maximum insertion position of the bearing flange (15), offset by 90°, in each case a lug (16) and a clamping element (21) engage between the openings (5).

## Revendications

1. Boîtier à monter dans une paroi pour des éléments d'installation sanitaires, avec une paroi latérale (2) dans laquelle sont prévues des ouvertures de passage (5) pour des conduites de raccordement, avec un élément de serrage (21) et avec une bride d'appui (15) du côté extérieur pour un revêtement mural, qui est déplaçable progressivement le long de la paroi latérale (2) et est conçue en pouvant être fixée en étant engagée par friction sur la paroi latérale (2) à chaque distance aux ouvertures de passage (5), dans lequel, entre la bride d'appui (15) et la paroi latérale (2), est conçu au moins un espace libre (18), dans lequel l'élément de serrage (21) peut coulisser, **caractérisé en ce que** l'élément de serrage (21) en forme de languette, fait saillie d'une deuxième bride (20), qui peut coulisser le long du même axe comme la bride d'appui (15).

2. Boîtier à monter dans une paroi selon la revendication 1, **caractérisé en ce qu'**une patte (16) fait saillie de la bride d'appui (15) dans la zone de chaque espace libre (18), laquelle prolonge la zone de serrage.

3. Boîtier à monter dans une paroi selon la revendication 1 ou 2, **caractérisé en ce que** la paroi latérale (2) présente une section à cylindre creux (3) se raccordant aux ouvertures de passage (5) et la bride d'appui (15) et la deuxième bride (20) sont approximativement en forme d'anneau.

4. Boîtier à monter selon la revendication 3, **caractérisé en ce que** chaque patte (16) et chaque élément de serrage (21) sont courbés à 90° au maximum parallèlement à la section à cylindre creux (3) de la paroi latérale (2), et se réduisent vers l'extrémité libre.

5. Boîtier à monter dans une paroi selon l'une des revendications 1 à 4, **caractérisé en ce que** dans la paroi latérale (2) sont prévues quatre ouvertures de passage (5) formant une croix et **en ce que**, de façon diamétralement opposée l'une à l'autre, entre les ouvertures de passage (5), deux ailes (9) font saillie de la paroi latérale (2), qui limitent la position d'insertion maximale de la bride d'appui (15), et **en ce que** dans la position d'insertion maximale de la bride d'appui (15), une patte (16) et un élément de serrage (21) pénètrent, à chaque rotation de 90°, entre les ouvertures de passage (5).
